# EUROPEAN PATENT APPLICATION

(11) **EP 4 292 771 A1**
(43) Date of publication of application: **20.12.2023**
(21) Application number: 23178709.4
(22) Date of filing: 12.06.2023
(51) Int. Cl.: B25J 9/08, B25J 9/10, B25J 9/12, B25J 13/08, H02K 5/00, B25J 19/00

(54) **MODULAR ROBOTIC JOINT**

(30) Priority: 13.06.2022 IT 202200012434
(71) Applicant: Automationware S.r.l., 30030 Martellago, (VE) (IT)
(72) Inventor: ROSSI, Fabio, I-30030 Martellago, VENEZIA (IT); FRIGO, Michele, I-30030 Martellago, VENEZIA (IT); SOFIA, Alisea, I-30030 Martellago, VENEZIA (IT)
(74) Representative: Mitola, Marco

(57) **Abstract**

A modular and reconfigurable robotic joint (4) for collaborative robots, comprising an external structure (8) comprising at least one first mechanical connection system (12) to an associable support (14) and/or at least one first mechanical arm (15), an internal structure (20) which houses and supports at least one electric motor (24), said internal structure (20) in turn being housed inside said external structure (8) and being separable from said external structure (8), the electric motor (24) being separable from said internal structure (20), a reducing device (28), at least partially housed within said internal structure (20), independent of and separable from the internal structure (20) and mechanically connected to said at least one electric motor (24) and at least one second mechanical arm (32), so as to transmit motion from said electric motor (24) to said second mechanical arm (32).

## Description

### FIELD OF APPLICATION

The present invention relates to a modular, reconfigurable robotic joint, particularly for use in collaborative robots, but also applicable in heterogeneous mechanical structures, or insertable as a humanoid joint or for use in rotary actuators.

The present application describes a possible embodiment of a modular, reconfigurable system of joints, each consisting of an external structure that is rigid but of variable size depending on the size of said joint, wherein an internal structure including motion-generating members and members for controlling said motion, described in detail hereinafter, and a system for fastening and disassembling the two structures from each other may be inserted. With the solution of the present invention, it is possible to use internal parts with control and motion generation functions that, with the same implementation, may be inserted into external structures with different functions and features, such as, for example:
- bodies used for making joints employed in robots working in sterile environments,
- bodies used for making joints employed in robots working in environments with hostile climatic conditions, such as humidity or the presence of acidic or explosive atmospheres, etc.

Said internal parts may also be integrated into structures of humanoid systems for articulating parts of the system. Due to the solution proposed by the present invention, since the internal parts with the function of controlling and generating the motion of each joint are removable, it is also possible to adapt the speed and torque of said joint through an appropriate choice of the reduction ratio used, allowing different kinematic solutions to be obtained with the same external mechanical structure.

With respect to conventional industrial robotics, where humans and robots typically perform different tasks separately, the modern approaches to collaborative robotics allow humans and robots to share the same workspace and tasks. In such scenarios, because humans and robots may coexist or collaborate in a shared workspace, these robots must be designed with attention to current product standards (ISO 10218 and ISO/TS 15066).

These regulations, in effect, include a number of requirements relating to the structure and shape of the robot in order to prevent dangerous impacts with humans. Compliance regulatory limits in terms of force, pressure, and energy of impact during a potential collision with human beings ensure their safety.

In the current robotics applications on the collaborative robotics market, robotic joints are not configurable.

A robotic arm made on the basis of the subject matter of this invention consists of a series of robotic joints that are composed of internal bodies, a series of external bodies, and links (connecting the joints together) that may be modulated in configurations that may be defined by extension and performance; the internal bodies are removable from the external bodies by the attachment system and replaceable with others. This special feature, which underlies the modularity and reconfigurability of the robotic arm, is the subject matter of the present patent application.

A possible embodiment of the subject matter of the present invention includes, for example, the construction of a series of 5 robotic joints with different sizes, but additional joints differing in size and performance may be developed on the same concept; a common feature is that all of them may be integrated into mechanical structures that will differ according to application scenarios.

### PRIOR ART

In the current robotics applications on the collaborative robotics market, robotic joints are not configurable.

To date, each robot, which typically includes six joints, is designed to achieve a certain maximum distance with a certain maximum load and a maximum speed. As a result, each joint is designed to have certain performances that may not be changed afterwards.

In a nutshell, the robotic joint, as it is generally understood, in the collaborative robotics landscape has so far been configured as a fixed and unconfigurable combination of external and internal parts and thus with unmodifiable performance.

The main disadvantage of the solutions on the market is the lack of reconfigurability of the performance of the robotic joint according to the specific task that the collaborative robot (cobot) is called upon to perform. The combination of payload and distance achievable by a given cobot size is inseparable. Thus it is not possible to have a cobot that for the same payload may reach a greater distance unless a robot of a larger size is chosen.

Another constraint of the joints of the cobots in production and in use today is the inability to reconfigure the joint's load-maximum speed performance according to the needs of the application.

In a nutshell, robotic joint solutions of the prior art are not flexible in terms of adaptability to different torque and speed demands that the joint and its relative robot must withstand, even as a result of end-user requirements that have changed from the initial conditions of use for which the joint was conceived and designed.

Examples of solutions of the prior art are described in US 6084373 A, US 2022/118634 A1, US 2013/340560 A1, KR 101948489 B1, US 2019/046283 A1 and CN 107471246 A.

### DISCLOSURE OF THE INVENTION

The need to solve the drawbacks and limitations mentioned with reference to the prior art is therefore felt.

This need is met by a modular and reconfigurable robotic joint in accordance with claim 1.

### DESCRIPTION OF THE DRAWINGS

Further features and advantages of the present invention will become more apparent from the following detailed description of preferred, non-limiting embodiments thereof, wherein:

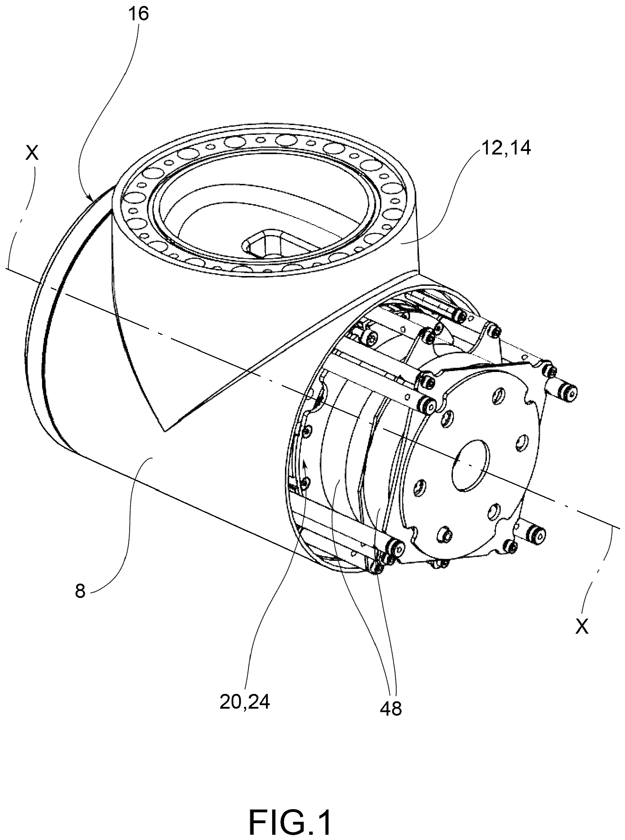

Fig. 1 is a perspective view, in an assembled configuration, of a robotic joint according to an embodiment of this invention;

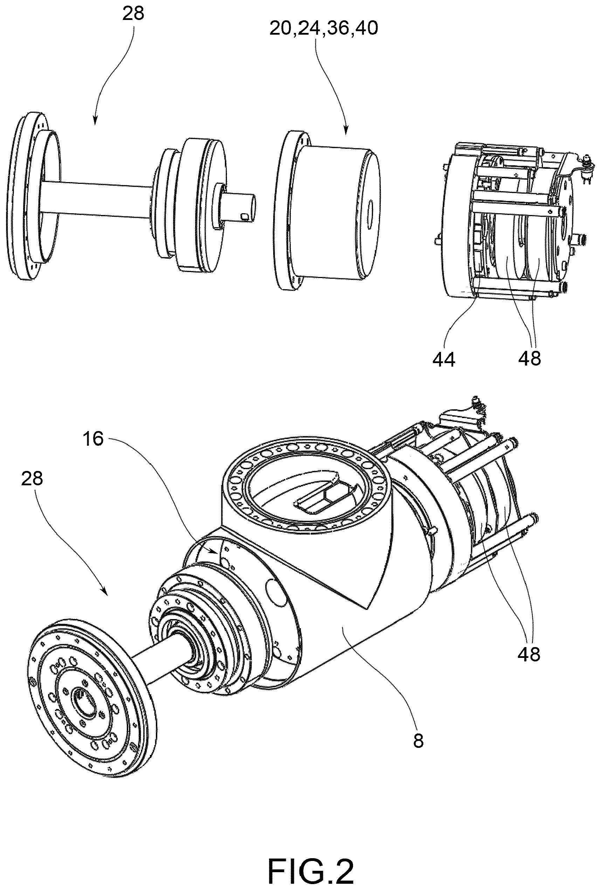

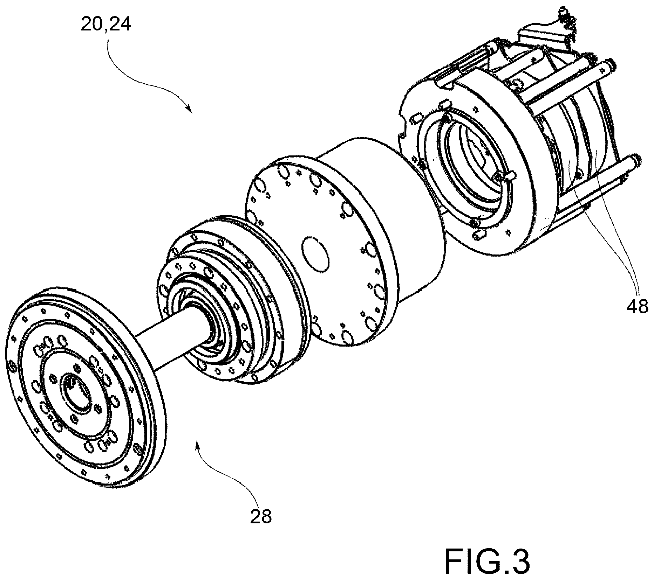

Fig. 2-3 are partially exploded perspective views of the robotic joint in Fig. 1;

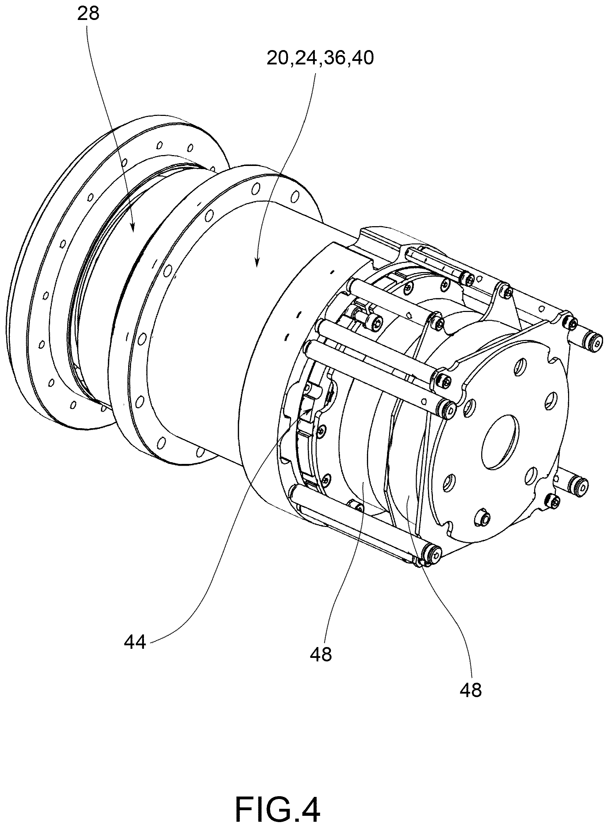

Fig. 4 is a perspective view of internal components of the joint in Fig. 1;

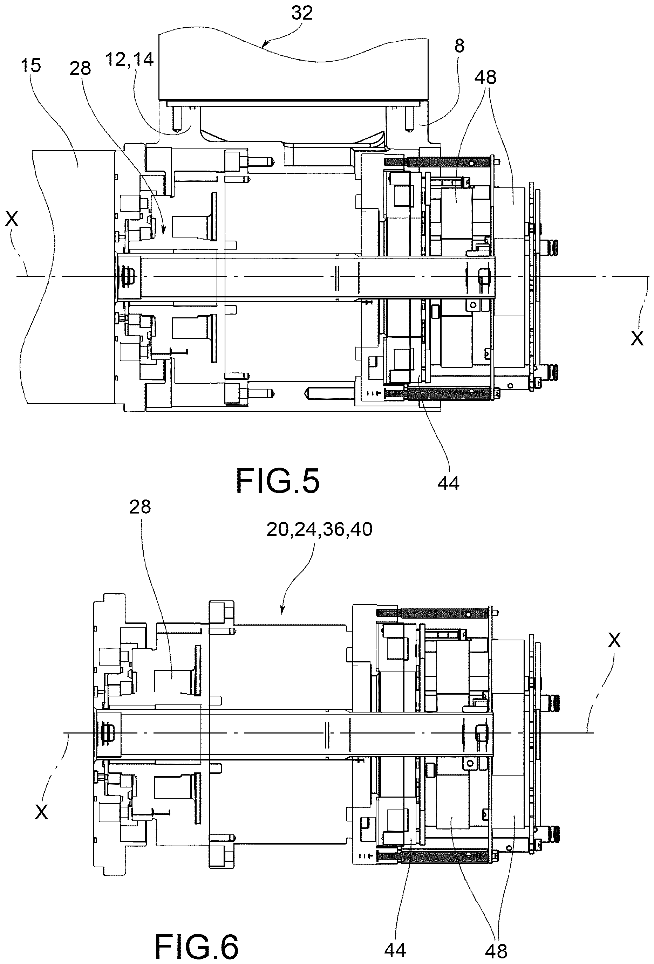

Fig. 5 is a sectional view, in assembled configuration, of the robotic joint in Fig. 1 provided with an external structure;
Fig. 6 is a cross-sectional view, in assembled configuration, of the robotic joint in Fig. 1 without an external structure.

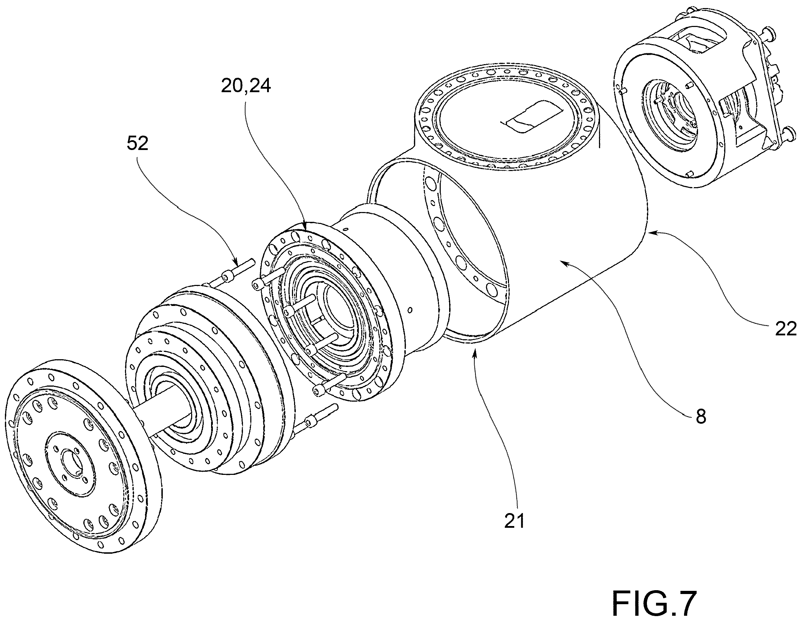

Fig. 7 is a partially exploded perspective view of the internal structure of the robotic joint and fastening system covered by the present invention.

Elements or parts of elements common to the embodiments described hereinafter will be indicated with the same numerical references.

### DETAILED DESCRIPTION

With reference to the aforesaid figures, 4 globally denotes an overall view of a robotic joint, including its internal structure, which is reconfigurable, and its external structure, which is determined by its field of application. For the purposes of the present invention, the type of robotic joint is not relevant, which, as seen, may be either a robot for industrial applications or a robot for light applications, as in the case of collaborative robots (cobots).

Preferably, the present invention relates to a robotic joint 4, for collaborative robots, of a modular type, i.e., composable and modifiable in its main components, according to the needs of the end user, as further described hereinafter.

The robotic joint 4 comprises an external structure 8 comprising at least one first mechanical connection system 12 to an associable support 14 and/or to at least a second mechanical connection system to an associable support or first connection element 15, such as one first mechanical arm.

Preferably, said external structure 8 comprises a hollow body, cylindrical with respect to a longitudinal axis X-X, which delimits a through cavity 16, opened by axial ends 21, 22 which are opposite along said longitudinal axis X-X.

Moreover, the robotic joint 4 comprises an internal structure 20 that houses and supports at least one electric motor 24, said internal structure 20 in turn being housed inside the external structure 8.

The internal structure 20 is separable from said external structure 8 by means of a fastening and disassembly system, which may preferably but not exclusively consist of a mechanical centering of the internal structure 20 with the external structure 8 with shaft/hole coupling in tolerance and fastening by removable connection means 52, such as, for example, industrial screws removable with hex keys.

The electric motor 24 may in turn be separable from the internal structure 20.

The robotic joint 4 also typically comprises a reducing device 28, at least partially housed in the internal structure 20, independent of and separable from the internal structure 20 and mechanically connected to said at least one electric motor 24 and to at least one second connection element 32, such as a second mechanical arm, so as to transmit motion from the electric motor 24 to said second mechanical arm 32.

The external structure 8 has a load-bearing function, and the internal structure 20, with the relative electric motor 24 and the reducing device 28 has a driving and control function. The two parts, namely the external structure 8 and the internal structure 20, are separable, and the internal structure 20 is replaceable.

Preferably, the internal structure 20 and the reducing device 28 are housed inside said through-hole cavity 16.

Preferably, said electric motor 24 is a synchronous permanent magnet and hollow shaft motor.

For example, the electric motor 24 comprises a stator 36 and a rotor or shaft 40, wherein the stator 36 is keyed in the internal structure 20 by interlocking coupling.

According to a possible embodiment, said interlocking coupling between the stator 36 and the internal structure 20 is made by thermal expansion.

According to a possible embodiment, said reducing device 28 is a harmonic gear with zero backlash and a hollow shaft.

According to a further possible embodiment, said reducing device 28 is a planetary or cycloidal reducer.

According to a possible embodiment, the robotic joint 4 is provided with a dynamic and parking mechanical brake 44. For example, said mechanical brake is provided with two independent manual release systems of said mechanical brake, a mechanical system and an electro-actuated system.

According to a possible embodiment, the robotic joint 4 is equipped with two position and speed sensors 48, typically multi-turn absolute magnetic encoders.

The robotic joint 4 is provided with a circuit board operatively connected to the electric motor 24 for its control, said circuit board being housed in the internal structure 20.

The present invention takes safety claims into account by upgrading the structure of known robotic joints in order to be able to reconfigure the robot while ensuring safety, scalability, energy efficiency, and easy maintenance. By decoupling from the external structure, it is possible to upgrade the robotic joint to give sustainability to the system over time, making it easy and more economical to maintain by being able to replace some parts with spare parts instead of having to replace the robotic joint completely as is currently the case in cobots on the market.

In particular, the proposed technical solution allows the coupling to be configured with multiple combinations of different motors, or sizes thereof, and different harmonic reducers (having different reduction ratios) depending on the best torque-speed compromise sought. In other words, the solution described so far provides the robotic joint with the ability to diversify torque and speed, with the same size, according to the required collaborative robotic application.

Moreover, by bringing back the concept of configurability of the torque-speed pairing for the 'n' joints that make up a collaborative robot, its range and scope may be optimized according to the specific trajectories, loads, speeds, and accelerations identified for the various tasks it will be called upon to perform.

As may be appreciated from that which has been described, the present invention overcomes the drawbacks of the prior art.

Additional advantages of the present invention are listed below:
Configurability of joint performance, i.e., changing the torque and speed characteristics of the joint and the relative robotic device,
Energy conservation,
Ease of replacement of individual components,
Increased overall robustness of the robotic joint,
Increased segregation of the contaminating parts with respect to applications in environments meeting the ISO 14644-1 classification (ISO 5 - ISO 7),
Economy of scale: in effect, the same components, such as the motor mount and the harmonic reducer, may be used with different components of the external structure of the coupling having different requirements and special features.

A person skilled in the art, for the purpose of satisfying contingent and specific needs, may make numerous modifications and variations to the solutions described above.

The scope of protection of the invention is defined by the following claims.

## Claims

1. Modular and reconfigurable robotic joint (4) for collaborative robots, comprising:
- an external structure (8) comprising at least one first mechanical connection system (12) to an associable support (14) and/or at least a second mechanical connection system to an associable support or to a first connection element (15), such as a first mechanical arm,
- wherein said external structure (8) comprises a fastening system that allows a removable internal structure (20) to be housed therein and is replaceable with an internal structure having various selectable characteristics,
- said fastening system comprising a shaft-hole coupling in tolerance and mechanical fastening through removable means of connection (52),
- wherein said internal structure (20) houses and supports at least one electric motor (24), said electric motor (24) in turn being separable from the internal structure (20),
- a reducing device (28), at least partially housed in the internal structure (20), independent and separable from the internal structure (20) and mechanically connected to said at least one electric motor (24) so as to transmit motion from the electric motor (24) to a second connection element (32), such as a second mechanical arm.

2. Modular and reconfigurable robotic joint (4) according to claim 1, wherein the external structure (8) has a load-bearing function and the internal structure (20), with the relative electric motor (24) and the reducing device (28) has a driving and control function and is removable though the removable connection means (52).

3. Modular and reconfigurable robotic joint (4) according to claim 1 or 2, wherein said external structure (8) comprises a hollow body, cylindrical with respect to a longitudinal axis (X-X), which delimits a through cavity (16), opened by axial ends (21, 22) which are opposite with respect to said longitudinal axis (X-X), wherein the internal structure (20) and the reducing device (28) are housed inside said through cavity (16).

4. Modular and reconfigurable robotic joint (4) according to claim 1, 2, or 3, wherein the fastening system is composed of the internal structure (20), the removable connection means (52), such as industrial screws, and the external structure (8).

5. Modular and reconfigurable robotic joint (4) according to claim 4, comprising an external structure (8) and an internal structure (20) of variable size, wherein the system for fastening the internal structure (20) to the external structure (8) provides said removable connection means (52), such as industrial screws.

6. Modular and reconfigurable robotic joint (4) according to any one of claims 1 to 5, wherein the robotic joint (4) is provided with a dynamic and parking mechanical brake:
- wherein said mechanical brake is provided with a double manual release system of said mechanical brake, one mechanical and one electro-actuated, the two release systems being independent from each other.

7. Modular and reconfigurable robotic joint (4) according to claims 1 to 6, wherein said electric motor (24) comprises a stator (36) and a rotor or shaft (40), wherein the stator (36) is keyed in the internal structure (20) by interlocking coupling, wherein said interlocking coupling between the stator (36) and the internal structure (20) is made by thermal expansion.

8. Robotic device comprising at least one robotic joint (4) according to any one of claims 1 to 7.
